# EUROPÄISCHE PATENTANMELDUNG

(11) **EP 2 309 080 A2**
(43) Veröffentlichungstag der Anmeldung: **13.04.2011**
(21) Anmeldenummer: 10009866.4
(22) Anmeldetag: 17.09.2010
(51) Int. Cl.: E04H 6/02, F24J 2/52, H01L 31/042

(54) **Als Carport nutzbares Stahlgerüst für eine Photovoltaikanlage**

(30) Priorität: 30.09.2009 DE 102009043779
(71) Anmelder: Adensis GmbH, 01129 Dresden (DE)
(72) Erfinder: Beck, Bernhard, 97332 Volkach OT Dimbach (DE)

(57) **Zusammenfassung**

Es wird ein Grundgestell (1) für eine mit Photovoltaikmodulen (23) bestückte Parkraumüberdachung vorgeschlagen, bei welchem zwei spiegelbildlich zueinander aufgebaute Hälften (1',1") vorgesehen sind, von denen jede einen aus drei Innenstreben (5a-5c) zusammengesetzten inneren Bogen (5) und einen aus drei Außenstreben (7a-7c) zusammengesetzten äußeren Bogen (7) aufweist, die mittels Querstreben (15,17,19) miteinander verbunden sind. Die Konstruktion ist leicht und einfach zu fertigen.

## Beschreibung

Die Erfindung bezieht sich auf ein Grundgestell für eine mit Photovoltaikmodulen bestückte Parkraumüberdachung.

Stahlgerüste, die geeignet sind Photovoltaikanlagen zu tragen sind mannigfaltig bekannt. Bei diesen Gerüsten werden üblicherweise Stützen in zwei parallelen, unterschiedlich hohen Reihen in den Boden eingerammt und mit Querbalken versehen, auf denen wiederum Modulschienen verlegt sind. Auf den Modulschienen sind dann die eigentlichen Photovoltaikmodule unter einer bevorzugten Schräge montiert. Die Schräge dient dazu, die Sonnenstrahlen optimal einzufangen und in elektrische Energie umzuwandeln.

Auf der anderen Seite sind auch Carports oder großflächig überdachte Parkplätze bekannt, bei denen die Automobile gegen Hitze und/oder Witterung geschützt sind.

Der vorliegenden Erfindung liegt die Überlegung zugrunde, dass die Kombination beider Funktionen anzustreben ist, um mit ein und demselben Gerüst sowohl eine Unterkonstruktion für Photovoltaikmodule, als auch einen Schutz gegen Sonne für unterhalb des Gerüsts geparkte Kraftfahrzeuge zu erreichen. Entsprechend ist es die Aufgabe vorliegender Erfindung, eine kostengünstige Trägerkonstruktion anzugeben, bei der die dem Himmel zugewandte Oberseite möglichst groß ist und zudem noch ein möglichst günstiger Einstrahlwinkel bereitgestellt wird.

Diese Aufgabe wird erfindungsgemäß dadurch gelöst, dass das Grundgestell zwei spiegelbildlich zueinander aufgebaute Hälften umfasst, von denen jede einen aus drei Innenstreben zusammengesetzten inneren Bogen und einen aus drei Außenstreben zusammengesetzten äußeren Bogen aufweist, wobei bei jeder Hälfte:
- Die erste Innenstrebe und die erste Außenstrebe insbesondere an einem gemeinsamen Ankerpunkt am Boden befestigt sind und von dort in einem spitzen Winkel zueinander wegführen;
- die sich an die erste Innenstrebe bzw. die erste Außenstrebe jeweils anschließende zweite Innenstrebe und zweite Außenstrebe unter einem flacheren Winkel in Bezug zur Waagerechten verlaufen als die erste Innen- bzw. erste Außenstrebe;
- die sich an die zweite Innenstrebe bzw. die zweite Außenstrebe jeweils anschließende dritte Innenstrebe und dritte Außenstrebe unter einem flacheren Winkel in Bezug zur Waagerechten verlaufen als die zweite Innen- bzw. zweite Außenstrebe;
- drei Querstreben vorgesehen sind, von denen die erste die oberen Enden der ersten Innen- und Außenstrebe miteinander verbindet, die zweite das obere Ende der zweiten Innenstrebe mit dem unteren Ende der zweiten Außenstrebe miteinander verbindet; und die dritte die oberen Enden der zweiten Innen- und Außenstrebe miteinander verbindet; und
- das Ende der dritten Außenstrebe weit über das Ende der dritten Innenstrebe herausragt, und in der Mitte der Parkraumüberdachung mit dem spiegelbildlichen Ende der entsprechenden anderen Hälfte verbunden ist.

Unter Bogen wird dabei verstanden, dass die Streben jeweils in einem Bogen angeordnet sind, aber selber nicht bogenförmig ausgestaltet sein brauchen. Dabei ist es sinnvoll, wenn der innere und der äußere Bogen jeweils nur drei Streben umfasst und ansonsten keine weiteren Streben zur Bildung des Bogens herangezogen werden. Drei Streben pro Bogen sind ausreichend, um die angestrebte Stabilität zu erreichen. Ein mehr Streben aufweisender Bogen würde unnötig den Material- und Fertigungsaufwand erhöhen.

Die dritte Außenstrebe wird dabei später mit den Photovoltaikmodulen belegt, Dies geschieht vorzugsweise indirekt über die Verwendung zusätzlicher Querholme, die quer über mehrere parallel angeordnete Grundgerüste montiert sind, auf die eine Dachhaut montiert wird. Zur Erzielung einer großen nutzbaren Fläche für die PV-Module sollte das Ende der dritten Außenstrebe zwischen zwei und sechs Meter, insbesondere zwischen drei und fünf Meter, über das Ende der dritten Innenstrebe herausragen. Wenn die dritte Außenstrebe eine Länge zwischen sechs und zwölf Meter aufweist, ist dann das Ende der dritten Innenstrebe ungefähr in der Mitte der dritten Außenstrebe mit dieser verbunden. Die Enden der jeweils dritten Außenstrebe einer Hälfte sind an einem Verbindungspunkt zusammengeführt, der auf einer Höhe zwischen 3500 mm und 5000 mm liegen sollte.

Ein geeignete Dimensionierung sieht vor, dass I) die drei Innenstreben aus einem Vierkantrohr der Abmessungen 120 mm x 80 mm x 3,6 mm mit einer Abweichung von 30 Prozent für jede Maßangabe bestehen, II) die erste und die zweite Außenstrebe aus einem Vierkantrohr der Abmessungen 60 mm x 60 mm x 2,5 mm mit einer Abweichung von 30 Prozent für jede Maßangabe bestehen, III) die drei Querstreben aus einem Vierkantrohr der Abmessungen 60 mm x 60 mm x 2,5 mm mit einer Abweichung von 30 Prozent Pro Maßangabe bestehen, und IV) dass die dritte Außenstrebe aus einem IPE Träger, insbesondere einem IPE 180 Träger mit einer Abweichung von 30 Prozent Pro Maßangabe besteht.

Zur Erhöhung der Stabilität ist es zweckmäßig, dass der Anfang und die Enden der beteiligten Streben an den Stellen ihrer Zusammenführung Knotenpunkte bilden, an denen eine fixierende Verstärkung, wie z.B. ein Formschuh, eine geformte Verstärkungsplatte, ein Innenbolzengestell oder dergleichen vorgesehen ist. Die aneinander stoßenden Streben können zunächst miteinander verschweißt werden und anschließend mit der Verstärkung versehen, in dem diese z.B. ebenfalls verschweißt, verklebt oder verschraubt wird. Es können aber je nach Wahl der Verstärkung auch zunächst die Kontenpunkte zusammen mit den Verstärkungen gebildet werden und anschließend entweder nur die Streben mit den Verstärkungen verbunden werden, oder in einem gemeinsamen Arbeitsgang, die Streben untereinander zusammen mit den Verstärkungen verschweißt oder sonstwie verbunden werden.

Wie oben angedeutet sind zur Erzielung einer großen, für die PV-Modulmontage zur Verfügung stehenden Fläche mehrere Grundgestelle parallel zueinander in einer fluchtenden Reihe aufzustellen. Dann werden die besagten Querholme in Richtung der Reihe parallel zueinander montiert. Der Abstand der Querholme ist an die Spannweite des zu verbauenden Dachmaterials so anzupassen, dass die Modulklammern auf dem Dachmaterial montiert werden und die PV-Module zwischen zwei gegenüberliegende Modulklammern befestigt werden können. Bei nicht nur langen, sondern auch in der Breite groß dimensionierten Parküberdachungen sind mehrere Reihen von Grundgestellen mit Rücken an Rücken montierten Hälften nebeneinander angeordnet, wobei die oberen Enden von benachbarten ersten Außenstreben jeweils miteinander verbunden sind. Zwischen Blöcken von z.B. drei benachbarten Reihen ist dann ein Freiraum für die Durchfahrt von Löschfahrzeugen und sonstigen Lastkraftwagen zu belassen.

Vorteilhafterweise verläuft die erste oder unterste Außenstrebe senkrecht zum Boden und die erste Innenstrebe ist dann unter einem spitzen Winkel zu ihr (1. Außenstrebe) nach Innen gerichtet. Generell gilt, dass zur Erzielung der Bogenform, jede folgende Strebe etwas flacher, also waagerechter verläuft, als die vorhergehende Strebe.

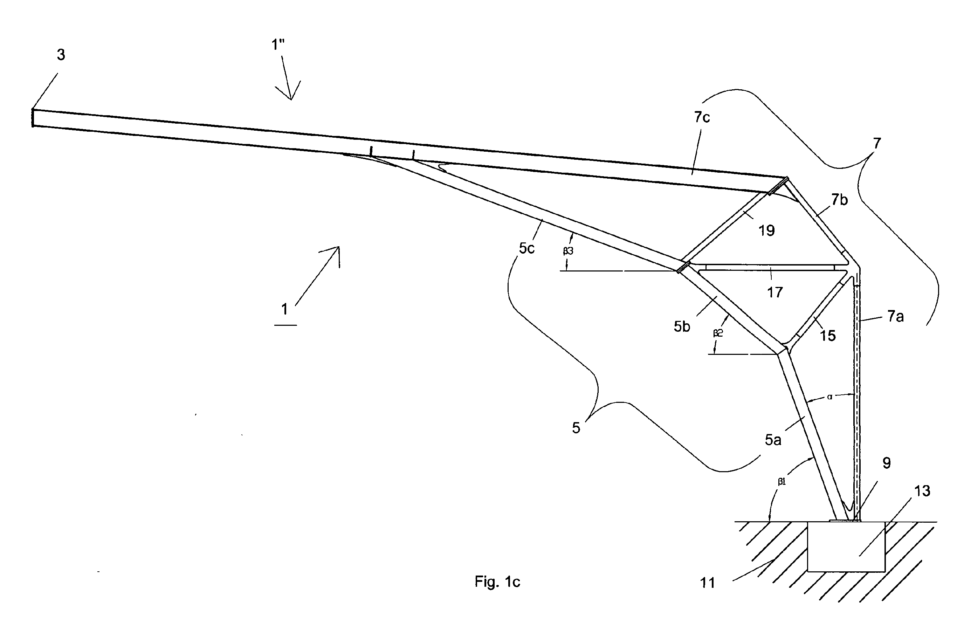

Die Angabe der Winkel zwischen den einzelnen Streben wird über die Figur 1c offenbart. Es gilt, dass eine Winkelabweichung von plus/minus 5° der gezeichneten Winkelbeziehungen der beteiligten Streben untereinander zulässig ist, ohne dass die Aufgabe und Funktion des Grundgestells beeinträchtigt wird.

Weitere Ausgestaltungen und Vorteile der Erfindung ergeben sich aus der Beschreibung eines Ausführungsbeispiels anhand der Figuren. Es zeigen:
- Fig. 1a: Eine Seitenansicht eines Grundgestells mit zwei spiegelbildlichen Hälften;
- Fig. 1b: eine Aufsicht zu Fig. 1a;
- Fig. 1c: eine Hälfte des Grundgestells vergrößert
- Fig. 2: eine Darstellung von zwei Rücken an Rücken montierter Hälften;
- Fig. 3: eine Detailansicht aus der Fig. 2; und
- Fig. 4: eine perspektivische Ansicht einer großflächigen Parkraumbedachung.

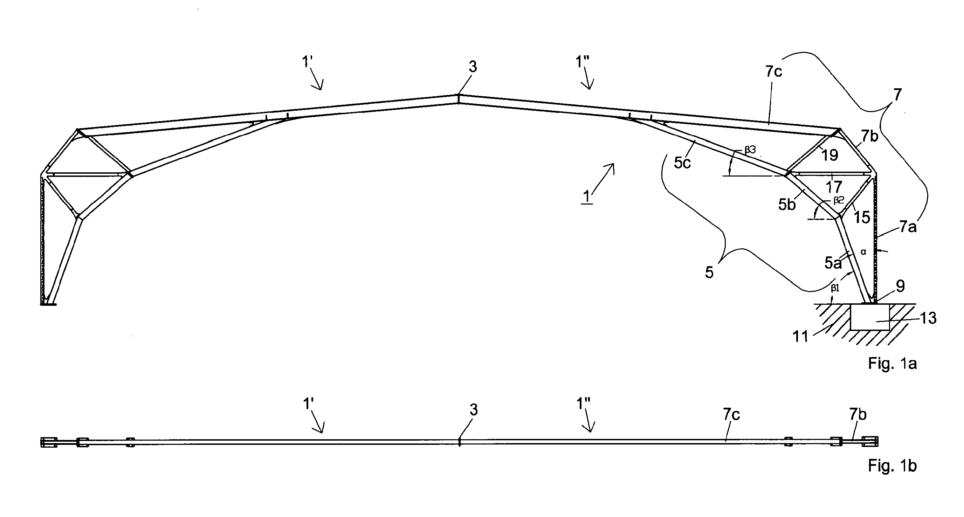

In den Figuren 1a bis 1c ist ein Grundgestell 1 dargestellt, welches aus zwei Hälften 1', 1" besteht, die sich nach der Montage in einem Verbindungspunkt 3 treffen und dort miteinander verbunden werden. Die Hälften 1' und 1" sind jeweils gleich aufgebaut, allerdings spiegelbildlich zueinander montiert.

Jede Hälfte besteht aus einem aus drei Innenstreben 5a,5b,5c zusammengesetzten inneren Bogen 5 und aus einem aus drei Außenstreben 7a,7b,7c zusammengesetzten äußeren Bogen 7. Die ersten Streben 5a,7a sind dicht nebeneinander an einem gemeinsamen Punkt 9 mit dem Boden 11 verankert, indem sie beispielsweise in einem dort eingelassenen Fundament 13 eingegossen sind. Die Streben 5a bis 5c und 7a bis 7c sind jeweils gerade, bilden aber gemäß ihrer Anordnung zueinander die Bögen 5 bzw. 7.

Die erste Innenstrebe 5a und die erste Außenstrebe 7a bilden einen spitzen Winkel α zueinander, wobei die erste Außenstrebe 7a im wesentlichen lotrecht auf den Boden 11 steht und die erste Innenstrebe 5a unter dem Winkel α nach innen gerichtet ist. Die oberen Enden der ersten Innenstrebe 5a und der ersten Außenstrebe 7a sind über eine ersten Querstrebe 15 miteinander verbunden. An den beiden Verbindungsstellen schließen sich die zweite Innenstrebe 5b bzw. die zweite Außenstrebe 7b an, wobei beide Streben 5b, 7b unter einem flacheren Winkel in Bezug zum Boden 11 verlaufen als die erste Innen- bzw. erste Außenstrebe 5a, 7a. An den eingetragenen Winkeln β ist dies daran zu erkennen, dass der Winkel β₁ ,der zwischen der ersten Innenstrebe 5a und dem Boden gebildet ist, größer ist als der Winkel β₂ , der zwischen der zweiten Innenstrebe 5b und dem Boden 11 gebildet ist. Analog zu den ersten Streben sind auch die oberen Enden der zweiten Innenstrebe 5b und der zweiten Außenstrebe 7b über eine dritte Querstrebe 19 miteinander verbunden. Zusätzlich ist eine zweite Querstrebe 17 vorgesehen, die das obere Ende der zweiten Innenstrebe 5b mit dem unteren Ende der zweiten Außenstrebe 7b miteinander verbindet. Es ist darauf hinzuweisen, dass in vorliegender Betrachtung, das obere Ende einer Bogenstrebe 5 zugleich auch das untere Ende der folgenden Bogenstrebe 5 ist. Entsprechend ließe sich zur zweite Querstrebe 17 auch sagen, dass sie zwischen dem oberen Ende der ersten Außenstrebe 7a und dem unteren Ende der dritten Innenstrebe 5c verläuft.

Auch für die dritte Innenstrebe 5c und die dritte Außenstrebe 7c gilt, dass sie unter einem flacheren Winkel in Bezug zur Waagerechten verlaufen als die zweite Innen- bzw. zweite Außenstrebe, im gezeigten Fall unter dem Winkel β₃ .

Wie es aus der Figur 1 ersichtlich ist, ragt das Ende der dritten Außenstrebe 7c weit über das Ende der dritten Innenstrebe 5c heraus und bildet so in Verbindung mit weiteren Grundgestellen eine große Fläche, auf der Photovoltaikmodule platziert werden können. In der Mitte der Parkraumüberdachung, also am Verbindungspunkt 3 sind die spiegelbildlich aufgestellten Hälften 1' und 1" an ihren Enden miteinander verbunden.

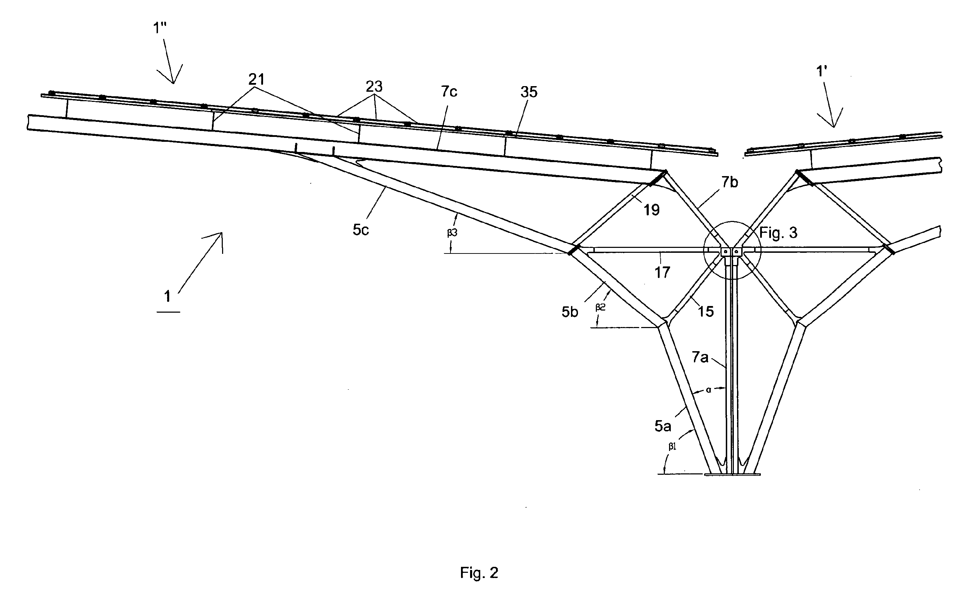

In der Figur 2 sind zwei Hälften 1' und 1" dargestellt, wie sie bei einer Rücken an Rücken Aufstellung vorliegen. In dieser Figur sind noch Längsholme 21 dargestellt, die in die Zeichnungsebene hinein verlaufen. Die Längsholme 21 überqueren mehrere zu einer ebenfalls senkrecht zur Zeichnungsebene aufgestellte Traggestelle 1 und dienen zur Befestigung einer Dachhaut 35 auf welcher Modulklammer (nicht gezeigt) befestigt werden, zwischen deren Klemmteilen wiederum eine Vielzahl an Photovoltaikmodulen 23 verklemmt ist.

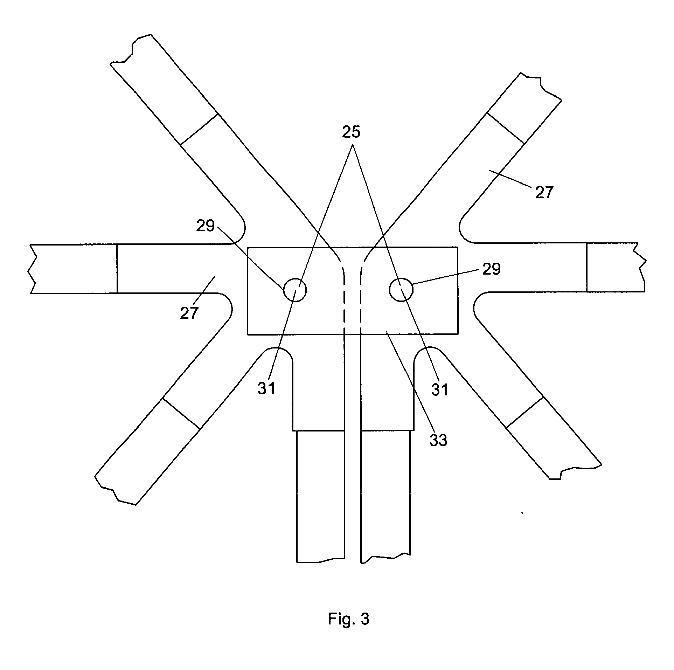

Die Figur 3 zeigt den in der Figur 2 eingekreisten Ausschnitt, der einen Knotenpunkt 25 darstellt, im Detail. An dem Punkt 25 treffen sich das obere ende der ersten Außenstrebe 7a, das untere Ende der zweiten Außenstrebe 7b, sowie ein Ende der ersten Querstrebe 15 und der zweiten Querstrebe 17, insgesamt also vier Enden. Die vier Enden sind mit Hilfe eines (oder wenn auf der Rückseite ein weiteres angeordnet ist von zwei) Knotenbleches verstärkt, welches an allen vier Enden fest verbunden, z.B. verschweißt oder verschraubt ist.

Im Bereich der Knotenpunkte 25 der Rücken an Rücken aufgestellten Traggestellhälften 1' und 1" ist jeweils eine Bohrung 29 vorgesehen, durch die jeweils ein Bolzen 31 geführt wird. Jeder der Bolzen 31 ist gleichzeitig durch eine weitere Öffnung einer Verbindungsplatte 33 geführt, die die beiden Hälften 1' und 1" miteinander verbindet. So wird die Lage der Hälften 1' und 1" zueinander fixiert. Anstelle des Knotenblechs können andere im Stahlbau übliche Fixier- und Verstärkungsmittel, wie z.B. eine Anordnung mit Schuhen, in welche jeweils ein Ende der Streben 7a, 7b, 15 und 17 eingebracht ist, vorgesehen sein. Ähnliche Mittel sind zur Versteifung sind an den anderen Schnittpunkten von Streben 5,7,15,17 und 19 vorgesehen.

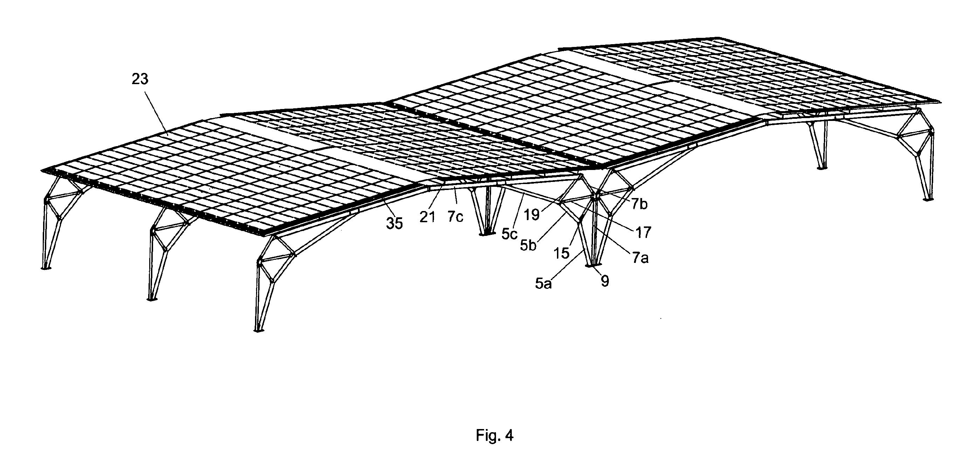

Die Figur 4 zeigt noch eine perspektivische Ansicht von mehreren zu einer Reihe aufgestellten Traggestellen, die wiederum zu mehreren Reihen zusammengefügt sind, um einen Großparkplatz zu bedecken. Diese Fläche ist ohnehin für die Parkfunktion verbraucht und kann doppelt genutzt werden, indem sie zugleich zu Zwecken der Energiegewinnung über Photovoltaik eingesetzt wird.

### Bezugszeichenliste

- 1: Grundgestell
- 1',1": Hälften des Grundgestells
- 3: Verbindungspunkt
- 5: innerer Bogen
- 5a-5c: innere Bogenstrebe
- 7: äußerer Bogen
- 7a-7c: äußere Bogenstrebe
- 9: Punkt
- 11: Boden
- 13: Fundament
- 15: erste Querstrebe
- 17: zweite Querstrebe
- 19: dritte Querstrebe
- 21: Längsholm
- 23: Photovoltaikmodul
- 25: Knotenpunkt
- 27: Knotenblech
- 29: Bohrung
- 31: Bolzen
- 33: Verbindungsplatte
- 35: Dachhaut

## Patentansprüche

1. Grundgestell (1) für eine mit Photovoltaikmodulen (23) bestückte Parkraumüberdachung, welches zwei spiegelbildlich zueinander aufgebaute Hälften (1',1") umfasst, von denen jede einen aus drei Innenstreben (5a-5c) zusammengesetzten inneren Bogen (5) und einen aus drei Außenstreben (7a-7c) zusammengesetzten äußeren Bogen (7) aufweist, wobei bei jeder Hälfte (1', 1"):
- Die erste Innenstrebe (5a) und die erste Außenstrebe (7a) an einem, insbesondere gemeinsamen Ankerpunkt (9) am Boden (11) befestigt sind und von dort unter Bildung eines spitzen Winkels (α) zueinander wegführen;
- die sich an die erste Innenstrebe (5a) bzw. die erste Außenstrebe (7a) jeweils anschließende zweite Innenstrebe (5b) und zweite Außenstrebe (7b) unter einem flacheren Winkel (β) in Bezug zur Waagerechten verlaufen als die erste Innen- bzw. erste Außenstrebe (5a bzw. 7a);
- die sich an die zweite Innenstrebe (5a) und die zweite Außenstrebe (7b) jeweils anschließende dritte Innenstrebe (5c) bzw. dritte Außenstrebe (7c) unter einem flacheren Winkel (β) in Bezug zur Waagerechten verlaufen als die zweite Innen- bzw. zweite Außenstrebe (5b bzw. 7b);
- drei Querstreben (15,17,19) vorgesehen sind, von denen die erste (15) die oberen Enden der ersten Innen- und Außenstrebe (5a,7a) miteinander verbindet, die dritte (19) die oberen Enden der zweiten Innen- und Außenstrebe (5b,7b) miteinander verbindet, und die zweite (17) das obere Ende der zweiten Innenstrebe (5b) mit dem unteren Ende der zweiten Außenstrebe (7b) miteinander verbindet; und
das Ende der dritten Außenstrebe (7c) weit über das Ende der dritten Innenstrebe (5c) herausragt, und in der Mitte (3) der Parkraumüberdachung mit dem Ende der entsprechenden anderen Hälfte (1 ") verbunden ist.

2. Grundgestell nach Anspruch 1, **dadurch gekennzeichnet, dass** das Ende der dritten Außenstrebe (7c) zwischen zwei und sechs Meter, insbesondere zwischen drei und fünf Meter, über das Ende der dritten Innenstrebe (5c) hinwegragt.

3. Grundgestell nach Anspruch 1 oder 2, **dadurch gekennzeichnet, dass** die dritte Außenstrebe (7c) eine Länge zwischen sechs und zwölf Meter aufweist.

4. Grundgestell nach einem der Ansprüche 1 bis 3, **dadurch gekennzeichnet, dass** die drei Innenstreben (5a-5c) aus einem Vierkantrohr der Abmessungen 120 mm x 80 mm x 3,6 mm mit einer Abweichung von 30 Prozent bestehen.

5. Grundgestell nach einem der Ansprüche 1 bis 4, **dadurch gekennzeichnet, dass** die erste und die zweite Außenstrebe (7a,7b) aus einem Vierkantrohr der Abmessungen 60 mm x 60 mm x 2,5 mm mit einer Abweichung von 30 Prozent bestehen.

6. Grundgestell nach einem der Ansprüche 1 bis 5, **dadurch gekennzeichnet, dass** die drei Querstreben (15,17,19) aus einem Vierkantrohr der Abmessungen 60 mm x 60 mm x 2,5 mm mit einer Abweichung von 30 Prozent bestehen.

7. Grundgestell nach einem der Ansprüche 1 bis 6, **dadurch gekennzeichnet, dass** die dritte Außenstrebe (7c) aus einem IPE Träger, insbesondere einem IPE 180 Träger, mit einer Abweichung von 30 Prozent besteht.

8. Grundgestell nach einem der Ansprüche 1 bis 7, **dadurch gekennzeichnet, dass** der Anfang und die Enden der beteiligten Streben an den Stellen ihrer Zusammenführung Knotenpunkte (25) bilden, an denen eine fixierende Verstärkung, wie z.B. ein Formschuh, eine geformte Verstärkungsplatte (27), ein Innenbolzengestell oder dergleichen vorgesehen ist.

9. Grundgestell nach einem der Ansprüche 1 bis 8, **dadurch gekennzeichnet, dass** der Anfang und die Enden der beteiligten Streben an den Stellen ihrer Zusammenführung Knotenpunkte (25) bilden, an denen sie miteinander verschweißt sind.

10. Grundgestell nach einem der Ansprüche 1 bis 9, **dadurch gekennzeichnet, dass** mehrere Grundgestelle (1) parallel zueinander in einer fluchtenden Reihe aufgestellt sind.

11. Grundgestell nach einem der Ansprüche 1 bis 10, **dadurch gekennzeichnet, dass** mehrere Grundgestelle (1) Rücken an Rücken nebeneinander angeordnet sind, wobei die oberen Enden von benachbarten ersten Außenstreben (7a) jeweils miteinander verbunden sind.

12. Grundgestell nach einem der Ansprüche 1 bis 11, **dadurch gekennzeichnet, dass** die erste Außenstrebe (7a) senkrecht zum Boden (11) verläuft.

13. Grundgestell nach einem der Ansprüche 1 bis 12, **dadurch gekennzeichnet, dass** der Punkt (3), an dem die Enden der jeweils dritten Außenstrebe (7c) einer Hälfte (1',1") zusammengeführt sind, auf einer Höhe zwischen 3500 mm und 5000 mm liegt.

14. Grundgestell nach einem der Ansprüche 1 bis 13, **dadurch gekennzeichnet, dass** die Streben gerade sind.

15. Grundgestell nach einem der Ansprüche 1 bis 13, **dadurch gekennzeichnet, dass** jede Hälfte (1',1") gemäß der Figur 1 c aufgebaut ist, wobei eine Winkelabweichung von plus/minus 5° der gezeichneten Winkelbeziehungen der beteiligten Streben untereinander zulässig ist.
